(19) Europäisches Patentamt

European Patent Office

Office européen des brevets

(11) **EP 2 650 664 A1**

(12) **EUROPEAN PATENT APPLICATION**

(43) Date of publication:
**16.10.2013 Bulletin 2013/42**

(51) Int Cl.:
**G01M 5/00** (2006.01)  **G05B 23/02** (2006.01)

(21) Application number: **12168249.6**

(22) Date of filing: **16.05.2012**

| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **27.03.2012 EP 12161410** | (71) Applicant: **Siemens Aktiengesellschaft<br>80333 München (DE)**<br><br>(72) Inventors:<br>• **Kozionov, Alexey<br>180005 Pskov (RU)**<br>• **Mokhov, Ilya<br>192281 St. Petersburg (RU)**<br>• **Pyayt, Alexander<br>198207 St. Petersburg (RU)** |
| --- | --- |

(54) **A method for monitoring a structure based on measurements of a plurality of sensors**

(57)    The invention refers to a method for monitoring a structure (1) based on measurements of a plurality of sensors (S1, S2, S3), where each sensor (S1, S2, S3) is installed at the structure (1) and provides measured values (x1, x2, x3) at a sampling frequency. In the method of the invention, measured values (x1, x2, x3) of each sensor (S1, S2, S3) are subjected to a Short-time Fourier Transform (STFT), resulting at a corresponding predetermined point in time ($t_i$) for each sensor (S1, S2, S3) in phase values ($\phi 11$, ... $\phi 3k$) for each predetermined base frequency out of a number of predetermined base frequencies (BF) of each sensor (S1, S2, S3). In a next step, phase delays ($\tau 12$, $\tau 13$, $\tau 23$) between the phase values ($\phi 11$, ... , $\phi 3k$) of pairs of sensors (S1, S2, S3) are calculated for one or more of the predetermined base frequencies (BF) of all sensors (S1, S2, S3). Eventually, the state of the structure (1) is assigned to a normal operation condition or an abnormal operation condition based on the calculated phase delays ($\tau 12$, $\tau 13$, $\tau 23$) of said one or more of the predetermined base frequencies (BF).

Fig. 2

EP 2 650 664 A1

**Description**

The invention refers to a method for monitoring a structure based on measurements of a plurality of sensors.

The invention refers to the field of structural health monitoring where engineering structures, such as earthen dams, buildings, bridges and the like, are monitored in order to identify developing failures in the structures. To do so, measurements gathered from a plurality of sensors installed at the structure are analyzed in order to detect abnormal behavior.

In the prior art, there are several approaches for data-driven methods in order to identify faults of a structure by sensor data. E.g., a model based on historical measurements is constructed, e.g. a linear autoregressive model or a nonlinear model based on neural networks. If the real sensor measurements deviate from the model's output, this can be interpreted as a potential anomaly occurring in the structure. Structural health monitoring is also described in the context of a statistical pattern recognition paradigm. This approach includes the step of feature extraction and information condensation for the sensor data of the structure as well as the development of a statistical model for feature discrimination.

It is an object of the invention to provide a method for monitoring a structure based on sensor measurements providing a reliable detection of anomalies in the structure.

This object is solved by the independent patent claims. Preferred embodiments are described in the dependent claims.

The method of the invention processes measurements of a plurality of sensors, where each sensor is installed at the monitored structure and provides measured values at a sampling rate. At corresponding predetermined points in time, the following method steps are performed:

In a step a), measured values of each sensor are subjected to a Short-time Fourier Transform, resulting at the corresponding predetermined point in time for each sensor in phase values for each predetermined base frequency out of a number of predetermined base frequencies of each sensor. In a next step b), phase delays (i.e. phase differences or values corresponding to phase differences) between the phase values of pairs of sensors are calculated for one or more of the predetermined base frequencies of all sensors. I.e., phase differences between the two phase values of the sensors of the corresponding pair of sensors are calculated. In a step c), the state of the structure is assigned to a normal operation condition or an abnormal operation condition based on the calculated phase delays of said one or more of the predetermined base frequencies.

The invention is based on the realization that phase delays between two sensors derived from the well-known Short-term Fourier Transform are a good and reliable measure for detecting anomalies in a structure. The above mentioned base frequencies are preferably so-called fundamental frequencies which are well-known in the context of Fourier transforms and refer to those frequencies in the spectrum where the Fourier transform has its main energy. Appropriate methods for determining the fundamental frequencies are well-known in the prior art. In a preferred embodiment, the number of predetermined base frequencies is determined based on a Fast Fourier Transform of historical measured values of each sensor. In a simple implementation of this embodiment, those frequencies out of the spectrum of the Fast Fourier Transform are regarded as base frequencies which have amplitudes higher than a predetermined threshold.

Step c) of the invention may be implemented by different techniques distinguishing between a normal and an abnormal state. E.g., an interval of phase delays may be defined beforehand, said interval referring to a normal operation condition. In case that the phase delay of at least one pair of sensors lies outside this interval, an abnormal operation condition of the structure is detected. In a preferred embodiment, an appropriate classifier trained in a training phase is used in step c). Preferably, a so-called one-sided classifier is used for this step. Such a classifier can be trained on training data only relating to a normal behavior of the structure. Nevertheless, such a classifier can distinguish between an abnormal and a normal operation condition. In a particularly preferred embodiment, the one-sided classifier is based on Neural Clouds and/or Gaussian Mixture Models which are well-known examples for one-sided classifiers.

In another embodiment of the invention, the state of a respective sensor is assigned to a normal or abnormal operation condition based on the spectrum of the Short-time Fourier Transform performed in step a) for the respective sensor. Such a normal or abnormal operation condition can also be regarded as a normal or abnormal operation condition of the overall structure. This enables a detection of failures also based on the data of separate sensors.

In a preferred variant of the above described embodiment, the assignment of the state of a respective sensor to a normal or abnormal operation condition is performed by a classifier and particularly a one-sided classifier trained in a training phase. Preferably, the same type of classifier is used as in method step c). Particularly, the classifier may be based on Neural Clouds and or Gaussian Mixture Models.

In another embodiment of the invention, the base frequencies included in the spectrum of the Short-time Fourier Transform performed in step a) for the respective sensor are compared with the predetermined base frequencies of the respective sensor, where an abnormal operation condition is assigned to the respective sensor in case that the base frequencies included in the spectrum of the Short-time Fourier Transform for the respective sensor differ from the predetermined base frequencies of the respective sensor. The base frequencies included in the spectrum of the Short-time Fourier Transform may be determined based on prior art methods. Changes in the base frequencies with respect to the predetermined base frequencies are also an indicator of an anomaly in the structure resulting in an abnormal operation condition. A difference between the base frequencies and the predetermined base frequencies refers to a difference in the number of frequencies as well as in a difference in the frequency values of those frequencies. Preferably, frequency values are regarded as different only if the difference between the values is greater than a predetermined threshold.

In another embodiment of the invention, the energy spectral densities (also referred as to energies) of the Short-time Fourier Transform performed in step a) for the predetermined base frequencies of the respective sensor at the corresponding predetermined point in time are compared with the corresponding energy spectral densities of the Short-time Fourier Transform performed in step a) for the predetermined base frequencies of the respective sensor at the previous point in time preceding the current point in time. An abnormal operation condition is assigned to the respective sensor in case that the corresponding energy spectral densities at the corresponding predetermined point in time and the previous point in time differ from each other, i.e. in case that the difference between those spectral densities exceeds a predetermined threshold.

The method of the invention may be used for monitoring any kind of structures. Particularly, the invention may be used for monitoring a dam or a building or a bridge, where the sensors are preferably pore pressure sensors and/or inclination sensors and/or displacement sensors installed at the dam or building or bridge.

Besides the above method, the invention also refers to a system for monitoring a structure based on measurements of a plurality of sensors, where each sensor is installed at the structure and provides measured values at a sampling frequency, wherein the system includes a computer means for performing at predetermined points in time steps a) to c) of the method of the invention. Preferably, any embodiment of the method of the invention may be performed by this system.

The invention also refers to a computer program product directly loadable into the internal memory of a digital computer, comprising software code portions for performing the method of the invention or one or more preferred embodiments of the method of the invention when said product is run on a computer.

Furthermore, the invention refers to a computer program for controlling a computer to perform the method according to the invention or one or more preferred embodiments of the method of the invention.

Embodiments of the invention will be described in the following with respect to the accompanying drawings wherein:

Fig. 1    shows a cross-sectional view of a dam being monitored with an embodiment of the invention;

Fig. 2    shows a diagram illustrating the method steps according to an embodiment of the invention; and

Fig. 3    shows a diagram illustrating the extraction of base frequencies according to an embodiment of the invention.

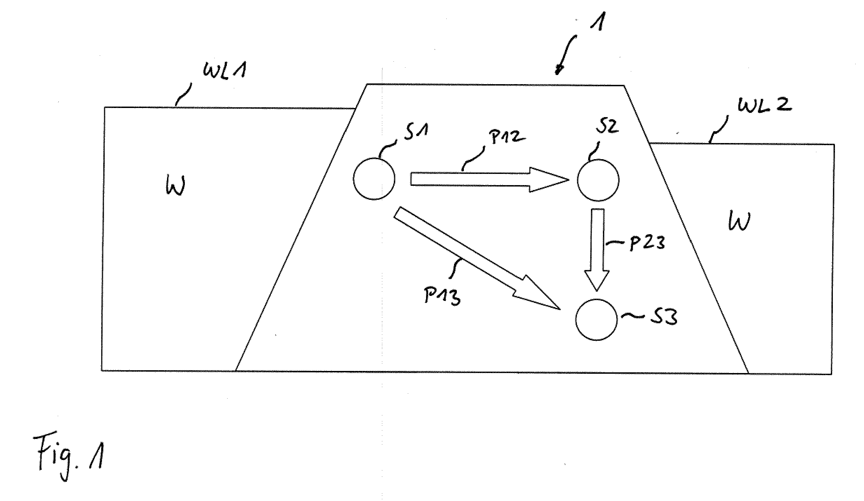

In the following, an embodiment of the inventive method will be described with respect to the structural health monitoring of a dam based on a plurality of pore pressure sensors usually installed in dams or dikes. Fig. 1 shows a cross-sectional view of such a dam 1. This dam prohibits water W on the left side of the dam having the water level WL1 to pass to the right side of the dam where the water W has the lower water level WL2. In the embodiment described herein, the measured values of pore pressure sensors are analyzed in order to detect an unusual or abnormal behavior of the dam. As an example, three pore pressure sensors S1, S2 and S3 are shown in Fig. 1. In the method of the invention, the phase delays between the phase values of respective pairs of pore pressure sensors derived from Short-time Fourier transform are analyzed. This is indicated by arrows P12, P23 and P13. I.e., the phase delay between sensors S1 and S2, sensors S2 and S3 and sensors S1 and S3 are calculated and analyzed.

The pore pressure sensed by sensors depends heavily on the water level. When the water level changes (i.e. due to lunar tides, a spring tide), the pore pressure inside the dam and thus the measured values of the sensors will change. However, due to the soil properties, such changes of pore pressures at different sensor positions will not take place simultaneously such that there will be a time delay between the signals of the sensors. This time delay is analyzed based on a phase delay. It is expected that this time delay can be described as a function or even as a constant. Deviation from this function can be e.g. interpreted as a change in the dike strength due to dike slippage. In such an instant, the structure of the dike changes and an external response may occur earlier in a sensor than before.

According to the foregoing, phase delays between the phase values of pairs of sensors should be stable in case of a normal behavior. In other words, an abnormal behavior shall be detected in case that changes in the phase delays of pairs of pore pressure sensors occur. Instead or additional to pore pressure sensors, other sensor data may be processed in the method according to the invention in order to detect anomalies. E.g., inclination, displacement or other types of sensors can be used for the phase delay analysis described in the following.

Before describing an embodiment of the invention in detail, the principles of Discrete Fourier Transform (DFT), Fast Fourier Transform (FFT) and Short-time Fourier Transform (STFT) will be described. Real-world data is usually discrete, thus discrete modification of the Fourier transform is required in order to process such data. For fast computation of the Discrete Fourier Transform, the well-known Fast Fourier Transform algorithm is used.

The Discrete Fourier Transform of a time series of measured data $X_n$ of a sensor is defined as follows:

$$X_k = \sum_{n=0}^{N-1} x_n e^{-\frac{2\pi i}{N}kn}$$ (1).

The inverse Discrete Fourier Transform has the following form:

$$x_n = \frac{1}{N}\sum_{n=0}^{N-1} X_k e^{\frac{2\pi i}{N}kn}$$ (2),

where:

N is the signal length and the number of components for decomposition;
$x_n$, $n = 0,..., N$-1 is the time series (in time steps $n = 0,..., N$-1);
$X_k$, $k = 0,...,N$-1 are the spectral components of the DFT (coefficients of the decomposition);
n is the timestamp;
k is the frequency.

The frequency of a DFT coefficient (radians) can be calculated as:

$$\omega_k = \frac{2\pi k}{N \cdot \Delta},$$

where $\Delta$ is the sampling time, i.e. the time interval between two subsequent measured values in the time series of the measurement data.

The amplitude $A_k$, the phase $\phi_k$ and the phase delay $\tau_{\phi k}$ for a spectral component $X_k$ of the DFT are calculated as follows:

$$A_k = |X_k| = \sqrt{\mathrm{Re}(|X_k|)^2 + \mathrm{Im}(|X_k|)^2},$$

$$\phi_k = \arg(X_k) = \mathrm{atan}(\mathrm{Im}(X_k), \mathrm{Re}(X_k)),$$

$$\tau_{\phi k}(\omega_k) = -\frac{\phi_k}{\omega_k}.$$

In the following, the well-known Short-time Fourier Transform is used in order to detect anomalies in the behavior of a dam. Unlike the Fourier transform, STFT represents a signal in both time and frequency domain. This property provides an anomaly detection by tracking the spectrum changes in the time domain. The time-frequency representation of the Short-time Fourier Transform is performed by calculating the Fast Fourier Transform in a sliding window (frame) along time (timestamps). Each new sliding window overlaps with the previous window in order to reduce boundary effects. The coefficients of the Short-time Fourier Transform have a time delay at each frequency of decomposition.

The Short-term Fourier Transform STFT of a discrete time series of measured values x[n] at timestamps n is represented by:

$$\mathrm{STFT}(x[n]) \equiv X(n, \omega_k) = \sum_{l=0}^{m-1} x[n-l] w[l] e^{-j\omega_k n} ,$$

where:

x[n] is the time series of the measured values (in timestamps $n$ = 0,..., $N$-1, where N is the length of the time series);
$X(n, \omega_k)$ is the Discrete Fourier Transform of $x[n]$ in window w; where w is a window function (e.g. rectangular window, Hamming, Gaussian);
m is the number of timestamps in the window.

The frequency of a DFT coefficient (radians) $X(n, \omega_k)$ is calculated as $\omega_k = 2\pi f_k = \dfrac{2\pi k}{N \cdot \Delta}$ , where $k$ = 0,...,

$N$-1 is the index of frequency.

The Short-time Fourier Transform is the time-frequency representation of signal properties. Furthermore, the coefficients received at each timestamp have the properties of a Discrete Fourier Transform.

The phase $\phi$ and the phase delay $\tau_\phi$ $(n, \omega_k)$ can be obtained from the components of the Short-time Fourier Transform as an argument of each component. The influence of the sliding window w produces an increasing and jump discontinuity of phase along time. The phase and the phase delay are defined as follows:

$$\phi(n, \omega_k) = \arg(X(n, \omega_k)),$$

$$\tau_\phi(n, \omega_k) = -\frac{\phi(n, \omega_k)}{\omega_k} ,$$

where $\phi$ $(n, \omega_k)$ is the phase shift at the timestamp n and the frequency $\omega_k$.

The phase shift difference $\Delta\phi$ $(n, \omega_k)$ and the difference of phase delays $\Delta\tau_\phi$ $(n, \omega_k)$ between two sensors S1 and S2 can be calculated as follows:

$$\Delta\phi(n, \omega_k) = \phi_1(n, \omega_k) - \phi_2(n, \omega_k),$$

$$\Delta\tau_\phi(n, \omega_k) = -\frac{\Delta\phi(n, \omega_k)}{\omega_k} ,$$

where:

$\Delta\phi$ $(n, \omega_k)$ is the phase shift difference at the timestamp n of frequency $\omega_k$;

$\Delta\tau_\phi$ $(n, \omega_k)$ ) is the phase delay difference at the timestamp n of the frequency $\omega_k$;

$\phi_1(n,\omega_k)$ is the phase shift of sensor S1;

$\phi_2(n,\omega_k)$ is the phase shift of sensor S2.

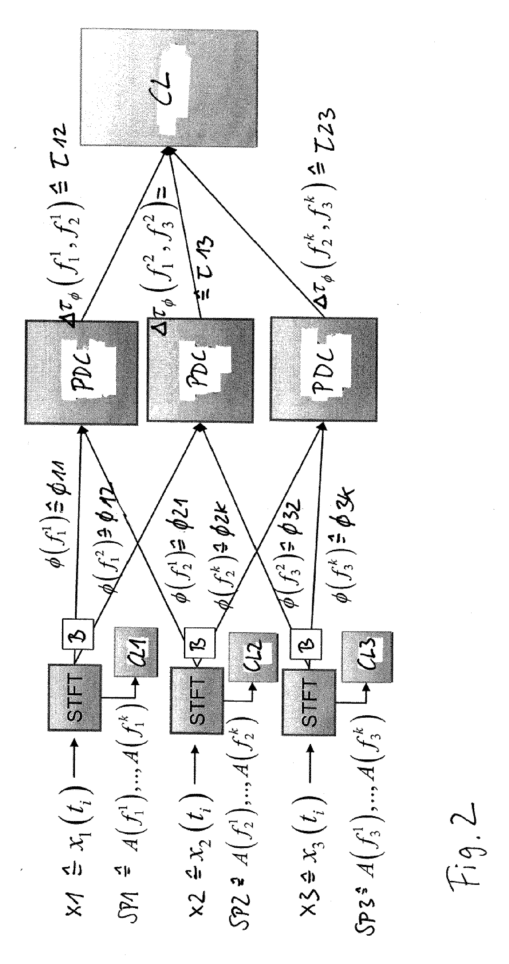

With reference to Fig. 2, the above described Short-time Fourier Transform is applied to the respective measured values at predetermined points in time $t_i$. According to Fig. 2, x1 refers to the time series of measured values of sensor S1, x2 to the time series of measured values of sensor S2 and x3 to the time series of measured values of sensor S3. Each time series is subjected to a Short-time Fourier Transform at predetermined time steps $t_i$. This transform is indicated as STFT in Fig. 2. The transform leads to corresponding spectra SP1 for sensor S2, SP2 for sensor S2 and SP3 for sensor S3. Each spectrum comprises amplitudes $A\left(f_i^{\,j}\right)$ where the lower index i refers to the sensor number (i = 1, 2, 3) and the upper index j refers to the frequency within the respective spectrum. In the embodiment described herein, these spectra will be classified by corresponding classifies CL1, CL2, CL3 as will be explained later on. Each Short-time Fourier Transform further provides corresponding phases $\phi ij$ for each sensor i and frequency j. According to the invention, only the phases of base frequencies are processed. In the embodiment described herein, the base frequencies refer to so-called fundamental frequencies. A Fourier transform of a signal has the main part of energy in the fundamental frequencies and its harmonics. There are well-known procedures in the prior art in order to determine those fundamental frequencies. Methods for determining fundamental frequencies which may be used in the embodiment described herein can be found at the following web links:

http://www.cs.uregina.ca/Research/Techreports/2003-06.pdf  http://miracle.otago.ac.nz/postgrads/tartini/papers/A Smarter Way to Find Pitch.pdf

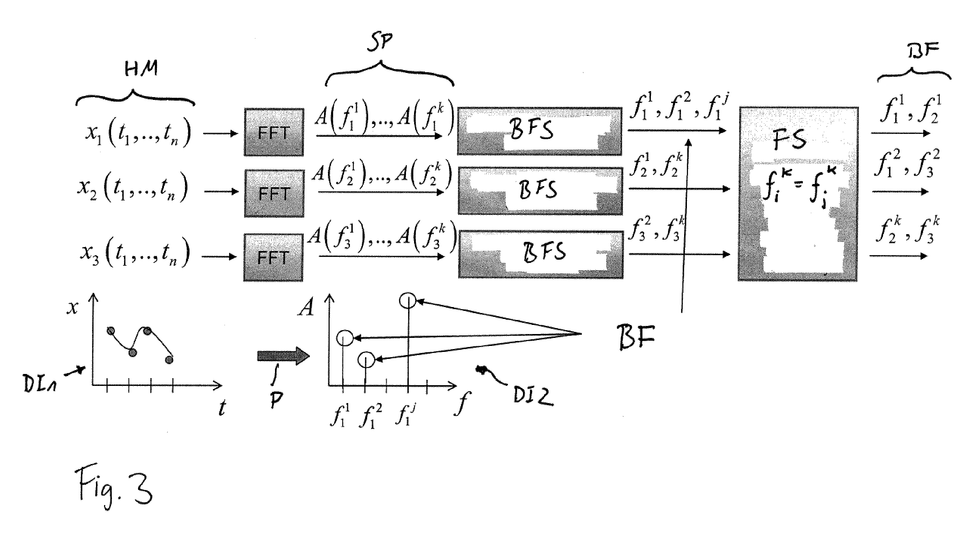

The base frequencies for which in Fig. 2 the phases are calculated have been determined beforehand based on the Fast Fourier Transform of historical measured values as shown in Fig. 3. In this figure, the historical measurements HM for each sensor S1 to S3 are designated as $x_1$ $(t_1, ..., t_n)$ for sensor S1, $x_2$ $(t_1, ..., t_n)$ for sensor S2 and $x_3$ $(t_1, ..., t_n)$ for a sensor S3. The Fast Fourier Transform is applied to this measured data resulting in a spectrum SP of amplitudes $A\left(f_i^{\,j}\right)$ **,** where i refers to the sensor index and j refers to the frequency index. Thereafter, the fundamental or base frequencies are selected as indicated by corresponding blocks BFS for each of the spectra of the sensors. As explained above, well-known methods for determining the base frequencies may be used. The resulting base frequencies as a whole are designated as BF in Fig. 3.

The step of selecting base frequencies is also indicated in the lower part of Fig. 3, where diagram DI1 shows a time series of measurement data. This time series is subjected to a Fast Fourier Transform as indicated by arrow P, resulting in a spectrum of coefficients as indicated by diagram DI2. Fundamental frequencies having the main part of the energy of the spectrum are extracted as base frequencies. In Fig. 3, frequencies $f_1^1$, $f_1^2$ and $f_1^{\,j}$ are extracted as base frequencies for the sensor S1. In a next step, designated as FS, appropriate frequencies for the phase shift analysis of corresponding pairs of sensors are chosen. I.e., the phase shift analysis is performed for the base frequencies which are identical for the sensors in a pair of sensors. This is indicated by equation $f_i^{\,k} = f_j^{\,k}$ in the block FS. For those base frequencies of each sensor pair, the respective phase differences are calculated.

As can be seen from Fig. 2, the calculation of the phase delay for the respective sensor pairs is designated by blocks PDC. The upper block PDC refers to the calculation of phase delay $\tau12$ between sensors S1 and S2. The middle block PDC refers to the calculation of the phase delay $\tau13$ between sensors S1 and S3. The lower block PDC represents the calculation of the phase delay $\tau23$ between sensors S2 and S3. For the phase delay between sensors S1 and S2, the base frequency with the index i=1 is used. For the calculation of the phase delay between the sensors S1 and S3, the base frequency with the index i=2 is used. For the phase delay between sensors S2 and S3, the frequency with the index i=k is used. If appropriate, for each phase delay calculation more than one base frequency can be considered.

In the embodiment described herein, the corresponding phase delays $\tau12$, $\tau13$ and $\tau23$ are fed to a one-sided classifier designated as CL. One-sided classifiers are well-known in the prior art and are trained on training data only representing the normal behavior of the system. I.e., the one-sided classifier CL has been trained beforehand on the phase delays calculated for sensor data representing a normal behavior of the corresponding dam. Though the classifier only uses training data referring to normal behavior, this classifier enables the detection of anomalies based on the phase delays used as input in the classifier. In the embodiment described herein, a classifier based on Neural Clouds (see document [1]) is used. However, any other prior art one-sided classifiers may be used in the phase shift analysis, e.g. Gaussian Mixture Models (see document [2]).

As a result of the classifier CL, an abnormal behavior of the monitored system is detected in case that the classifier CL assigns the phase delays calculated in blocks PDC to an abnormal behavior. Hence, a global stability analysis of the monitored dam is provided by the classifier CL.

It should be noted that the phase delay calculation described above requires the same rate of measurements for all sensors for both during monitoring the structure and training the classifier to be used during monitoring. In case of different stable rates for different sensors, a resampling procedure should be carried out in order to align the rates of the sensors.

As mentioned above, the embodiment shown in Fig. 2 uses additional classifiers CL1, CL2 and CL3. Each classifier analyses the corresponding spectrum SP1 to SP3 of the sensors S1 to S3. Those classifiers are also one-sided classifiers. Particularly, the same type of classifier as used for the phase shift analysis may be used. As a consequence, an abnormal behavior of the data of each sensor is also detected based on the corresponding spectra obtained by the Short-time Fourier Transform.

Fig. 2 further includes blocks B which are placed after each Short-time Fourier Transform. Those blocks B refer to an additional analysis for detecting abnormal behavior. In each block, the base frequencies which are obtained for the Short-time Fourier Transform, i.e. the number and the values of those base frequencies, are compared to the predetermined base frequencies as calculated in Fig. 3. If any deviations occur between those base frequencies, this is also an indication of an abnormal behavior which can be detected by the corresponding blocks B. Additional to the base frequencies, also a change of the energy of the components in the spectrum for each base frequency with respect to the previous time step can be monitored. If a change occurs, this is also an indication of an abnormal behavior which can be detected in the method described herein.

The method as described in the foregoing has been tested with respect to measurement data of a dike. The measured values refer to the data of corresponding pore pressure sensor. An abnormal behavior of the dike resulting from a broken sensor could be detected based on the above described phase analysis between a working sensor and the broken sensor.

According to the invention, a new scheme of structural health monitoring is provided. The overall system behavior is analyzed based on the phase delays between a plurality of sensors. This leads to a reliable detection of an abnormal behavior of a structure, such as a dam, bridge or building. Additionally, the sensor data of each sensor may be analyzed separately in order to detect abnormal behavior. The method of the invention can be used for monitoring of any structures with low or high speed processes. For earthen dams, pore pressure cycles are hours and days and, thus, refer to low speed processes. However, a dam or a building or a bridge may also be analyzed based on vibrodiagnostics having cycles in the range of milliseconds. Particularly, the method of the invention may be applied for active dike monitoring with forced vibration tests.

The method as described in the foregoing has several advantages. Particularly, all benefits of time-frequency analysis methods are used, i.e. the amplitude and the phase of STFT components are used for the stability analysis of structures. Both the STFT components referring to separate sensors as well as the phase delays of pairs of sensors may be used for anomaly detection. By applying one-sided classifiers for data analysis, only data relating to the normal behavior of the structure are required. This is important because data of abnormal behavior of a structure are rare. Furthermore, the methods of Fast Fourier Transform are optimized with respect to calculation times so that there is a low time delay for detecting an abnormal behavior.

List of References:

[1] Lang, B, Poppe, T" Minin, A., Mokhov, I., Kuperin, Y., Mekler, A., Liapakina, I.: Neural Clouds for Monitoring Complex Systems. Optical Memory and Neural Networks (Information Optics), 2008, Vol. 17. No. 3, pp. 183-192

[2] D. Reynolds, Gaussian Mixture Models, http://www.ll.mit.edu/mission/communications/ist/publica tions/ 0802_Reynolds_Biometrics-GMM.pdf

## Claims

1. A method for monitoring a structure (1) based on measurements of a plurality of sensors (S1, S2, S3), where each sensor (S1, S2, S3) is installed at the structure (1) and provides measured values (x1, x2, x3) at a sampling frequency, wherein at predetermined points in time ($t_i$):

a) measured values (x1, x2, x3) of each sensor (S1, S2, S3) are subjected to a Short-time Fourier Transform (STFT), resulting at the corresponding predetermined point in time $(t_i)$ for each sensor (S1, S2, S3) in phase values ($\phi$11,... $\phi$3k) for each predetermined base frequency out of a number of predetermined base frequencies (BF) of each sensor (S1, S2, S3);

b) phase delays ($\tau$12, $\tau$13, $\tau$23) between the phase values ($\phi$11, ... , $\phi$3k) of pairs of sensors (S1, S2, S3) are calculated for one ore more of the predetermined base frequencies (BF) of all sensors (S1, S2, S3) ;

c) the state of the structure (1) is assigned to a normal operation condition or an abnormal operation condition based on the calculated phase delays ($\tau$12, $\tau$13, $\tau$23) for said one ore more of the predetermined base frequencies (BF).

2. The method according to claim 1, wherein step c) is performed by a classifier (CL) and particularly a one-sided classifier trained in a training phase.

3. The method according to claim 2, wherein the one-sided classifier (CL) is based on Neural Clouds and/or Gaussian Mixture Models.

4. The method according to one of the preceding claims, wherein the state of a respective sensor (S1, S2, S3) is assigned to a normal or abnormal operation condition based on the spectrum (SP1, SP2, SP3) of the Short-time Fourier Transform (STFT) performed in step a) for the respective sensor (S1, S2, S3).

5. The method according to claim 4, wherein the assignment of the state of a respective sensor (S1, S2, S3) to a normal or abnormal operation condition is performed by a classifier (CL1, CL2, CL3) and particularly a one-sided classifier trained in a training phase.

6. The method according to one of the preceding claims, wherein the number of predetermined base frequencies (BF) of each sensor (S1, S2, S3) is determined based on a Fast Fourier transform (FFT) of historical measured values (HM) of each sensor (S1, S2, S3).

7. The method according to one of the preceding claims, wherein the base frequencies included in the spectrum of the Short-time Fourier Transform (STFT) performed in step a) for the respective sensor (S1, S2, S3) are compared with the predetermined base frequencies (BF) of the respective sensor (S1, S2, S3), where an abnormal operation condition is assigned to the respective sensor (S1, S2, S3) in case that the base frequencies included in the spectrum of the Short-time Fourier Transform (STFT) for the respective sensor (S1, S2, S3) differ from the predetermined base frequencies (BF) of the respective sensor.

8. The method according to one of the preceding claims wherein the energy spectral densities of the Short-time Fourier Transform (STFT) performed in step a) for the predetermined base frequencies (BF) of the respective sensor (S1, S2, S3) at the corresponding predetermined point in time $(t_i)$ are compared with the corresponding energy spectral densities of the Short-time Fourier Transform (STFT) performed in step a) for the predetermined base frequencies (BF) of the respective sensor (S1, S2, S3) at the previous point in time, where an abnormal operation condition is assigned to the respective sensor (S1, S2, S3) in case that the corresponding energy spectral densities at the corresponding predetermined point in time $(t_i)$ and the previous point in time differ from each other.

9. The method according to one of the preceding claims, wherein a dam (1) or building or bridge is monitored, where the sensors (S1, S2, S3) are preferably pore pressure sensors and/or inclination sensors and/or displacement sensors installed at the dam or building or bridge.

10. A system for monitoring a structure (1) based on measurements of a plurality of sensors (S1, S2, S3), where each sensor (S1, S2, S3) is installed at the structure (1) and provides measured values (x1, x2, x3) at a sampling frequency, wherein the system includes a computing means for performing at predetermined points in time $(t_i)$ the following steps:

a) measured values (x1, x2, x3) of each sensor (S1, S2, S3) are subjected to a Short-time Fourier Transform (STFT), resulting at the corresponding predetermined time step $(t_i)$ for each sensor (S1, S2, S3) in phase values ($\phi$11,... $\phi$3k) for each predetermined base frequency out of a number of predetermined base frequencies (BF) of each sensor (S1, S2, S3);

b) phase delays ($\tau$12, $\tau$13, $\tau$23) between the phase values ($\phi$11, ... , $\phi$3k) of pairs of sensors (S1, S2, S3) are calculated for one ore more of the predetermined base frequencies (BF) of all sensors (S1, S2, S3) ;

c) the state of the structure (1) is assigned to a normal operation condition or an abnormal operation condition based on the calculated phase delays ($\tau12$, $\tau13$, $\tau23$) of said one ore more of the predetermined base frequencies (BF).

11. The system according to claim 10, wherein the computing means is arranged to perform a method according to one of claims 1 to 9.

12. A computer program product directly loadable into the internal memory of a digital computer, comprising software code portions for performing the method according to one of claims 1 to 9 when said product is run on a computer.

13. A computer program for controlling a computer to perform a method according to one of claims 1 to 9.

Fig. 1

EP 2 650 664 A1

Fig. 2

Fig. 3

$HM$

$x_1(t_1,..,t_n)$ → FFT

$x_2(t_1,..,t_n)$ → FFT

$x_3(t_1,..,t_n)$ → FFT

$SP$

$A(f_1^1),..,A(f_1^k)$ → BFS

$A(f_2^1),..,A(f_2^k)$ → BFS

$A(f_3^1),..,A(f_3^k)$ → BFS

$f_1^1, f_1^2, f_1^j$

$f_2^1, f_2^k$

$f_3^2, f_3^k$

$FS$

$f_i^k = f_j^k$

$BF$

$f_1^1, f_2^1$

$f_1^2, f_3^2$

$f_2^k, f_3^k$

$BF$

$DL1$

$P$

$DI2$

$f_1^1 \quad f_1^2 \quad f_1^j$

EP 2 650 664 A1

Europäisches
Patentamt

European
Patent Office

Office européen
des brevets

## EUROPEAN SEARCH REPORT

Application Number

EP 12 16 8249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Lingyu Yu ET AL: "Advanced signal processing for enhanced damage detection with piezoelectric wafer active sensors", Smart Structures and Systems, vol. 1, no. 2 2005, pages 185-215, XP055077991, Retrieved from the Internet: URL:http://www.me.sc.edu/research/lamss/pdfnew/Journals/J48_SSS_V1-N2-April2005.pdf [retrieved on 2013-09-06] * the whole document * | 1-13 | INV. G01M5/00 G05B23/02 |
| A | US 2011/040496 A1 (BANERJEE SOURAV [US] ET AL) 17 February 2011 (2011-02-17) * paragraph [0027] - paragraph [0032] * * figures 1-3 * | 1-13 | |
| | | | TECHNICAL FIELDS SEARCHED (IPC) |
| | | | G01M G05B |

The present search report has been drawn up for all claims

| Place of search | Date of completion of the search | Examiner |
|---|---|---|
| The Hague | 6 September 2013 | Reto, Davide |

EPO FORM 1503 03.82 (P04C01)

**EP 2 650 664 A1**

ANNEX TO THE EUROPEAN SEARCH REPORT
ON EUROPEAN PATENT APPLICATION NO.

EP 12 16 8249

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2013

| Patent document cited in search report | Publication date | Patent family member(s) | Publication date |
|---|---|---|---|
| US 2011040496 A1 | 17-02-2011 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LANG, B ; POPPE, T ; MININ, A. ; MOKHOV, I. ; KUPERIN, Y. ; MEKLER, A. ; LIAPAKINA, I.** Neural Clouds for Monitoring Complex Systems. Optical Memory and Neural Networks. *Information Optics,* 2008, vol. 17 (3), 183-192